# EUROPEAN PATENT SPECIFICATION

(11) **EP 2 511 136 B1**
(45) Date of publication and mention of the grant of the patent: **13.01.2021**
(21) Application number: 11162244.5
(22) Date of filing: 13.04.2011
(51) Int. Cl.: B60Q 3/35, B60Q 7/00, B60Q 1/30

(54) **Illumination system for vehicle boot**
Beleuchtungssystem für Fahrzeugkofferraum
Système d'éclairage pour coffre de véhicule

(43) Date of publication of application: 17.10.2012
(73) Proprietor: Volvo Car Corporation, 40 531 Göteborg (SE)
(72) Inventor: Larsson, Annika, 41714, Göteborg (SE)
(74) Representative: Kransell & Wennborg KB

(56) References cited:
- DE-A1-102006 012 606
- DE-U1- 29 510 280
- DE-U1-202008 009 829
- FR-A1- 2 728 210
- FR-A1- 2 889 132
- GB-A- 2 215 450
- US-A1- 2005 073 852

## Description

### TECHNICAL FIELD

The present disclosure relates to an illumination panel for a boot of a vehicle. The disclosure further relates to a warning triangle being formed by a detachable illumination panel and a vehicle comprising the illumination panel and/or as well as use of a detachable illumination panel for illuminating a boot lid and for forming a warning triangle.

### BACKGROUND

In order to be able to locate objects in the boot even when it is dark outside, boots are commonly provided with a light source. The light source may be arranged in the boot lid as disclosed by the document US 5,580,153. According to this document one light source may be used both as a brake light, when emitting light rearwards through a red lens, and as a boot illumination, when emitting light downwards through a clear or neutral lens. Additionally the license plate lamps may be used to illuminate the boot when the boot lid is open. However, these lamps only have a limited extension in the transverse direction of the vehicle. Therefore the rear corners of the boot will be less illuminated than the rest of the boot, making it more difficult to locate objects being stored in these corners.

In addition, according to the document US 5,580,153 the generated light only has one colour, which is then modified by one of the lenses and may only be changed by replacing the lens. Each lens only provides one colour.

In case of accidents a warning triangle is commonly used in order to warn other road users. Preferably, it should be easy and quick to locate the warning triangle, such that no unnecessary time is lost before it is set up.

GB2215450 discloses an illumination panel in form of a warning triangle detachably attachable to an underside of a boot lid of a vehicle.

### SUMMARY

The object of the present disclosure is to overcome or ameliorate at least one of the disadvantages of the prior art, or to provide a useful alternative.

It is desirable to provide an illumination panel for a boot of a vehicle which is adapted to also illuminate the rear corners.

The object above may be achieved by the subject-matter of claim 1.

Thus, in a first aspect of the present invention there is provided an illumination panel detachably attachable to an underside of a boot lid of a vehicle, wherein said illumination panel has a first and a second configuration, wherein said illumination panel comprises at least two hinges such that said illumination panel, in said first configuration, is configured to be folded at said hinges to form a warning triangle, wherein in said second configuration, the illumination panel is configured to be unfolded and to extend such that its length is greater than its height and can be attached to the underside of the boot lid of the vehicle, whereby it extends in the transverse direction of the vehicle and is configured to illuminate the boot of said vehicle, and wherein the length of the illumination panel is at least 50%, preferably at least 70% and most preferably at least 90% of the width of the boot lid at its rear end.

Thereby the illumination panel is also able to illuminate the rear corners of the boot. The illumination panel may be adapted to substantially extend all the way between the rear lights of the vehicle. The width of the boot lid is measured at its rear end.

In an embodiment, the vehicle further comprises - a reflective region, located on the first surface of the boot lid receiving portion, such that the reflective region is adapted to reflect the light emitted by the illumination panel. Preferably the light is essentially specularly reflected, i.e. the angle of incidence and the angle of reflection are essentially the same.

The reflective region will reflect the light back upwards towards the boot lid again. The combination of the illumination panel and the opposing reflective region makes use of the emitted light in an efficient way. The reflective region may be made of any highly reflective material, such as a strip of metal, e.g. aluminum, a chromated plastic or a chromated metal.

The reflective region may be adapted to reflect at least 50%, preferably at least 70% and most preferably at least 90% of the light emitted by the illumination panel. Preferably, at least 50%, preferably at least 70% and most preferably at least 90%f the light emitted by the illumination panel is specularly reflected.

The illumination: panel may comprise means for generating light of a plurality of colours and may further also comprise means for selecting one of the plurality of colours. The selection of colours may be made by driver of the vehicle. When the purpose is to illuminate the boot, a white light may be suitable in order to locate objects in the boot. However, in a state of emergency of the vehicle, a red or orange light may be selected in order to warn other road users.

If the vehicle breaks down and is brought to a standstill at the side of a road, the boot lid may be opened, for example by the driver pressing a button, such that other road users may easily see the light emitted by the illumination panel in order to be alerted of the potentially dangerous situation.

The illumination panel may comprise a plurality of illumination sources, e.g. light emitting diodes, which are controllable on an individual level. Thereby it is possible to provide moving light, for example by activating a light source at a first end of the illumination panel, then sequentially activating new light sources in the direction towards a second end of the illumination panel and thereafter sequentially deactivating the active light sources, such that the illumination appears to be moving from the first end towards the second end. The emitted light may also, in addition or as an alternative, flash.

One or more rows of light emitting diodes may be used. The rows are preferably essentially parallel to the transverse direction of the vehicle.

The light emitting diodes may be arranged in a hollow body forming the illumination panel at least partly made of a transparent material, for example of acrylic glass.

In an embodiment the plurality of illumination sources comprises light emitting diodes of at least two different colours, the means for generating light of a plurality of colours being provided by varying the intensity of the light emitting diodes. The intensity for the at least two different colours may be chosen independently of each other. By combining light from the light emitting diodes of at least two different colours at independently selectable levels for each of them, the plurality of different colours is provided. As an example: if the first colour may be chosen in n different intensity levels and the second in m different levels, n times m different combinations are selectable.

The light emitting diodes may comprise red, green and blue light emitting diodes. By varying the intensity of red, green and blue light and adding these colours to each other a wide spectrum of different colours is provided.

As an alternative, it may be possible to use only one kind of light source, for which it is possible to set a preferred frequency of the emitted light, i.e. to select a colour, for example a sweepable light source.

The illumination panel may be detachably attached to the boot lid. It may for example be held by magnets, a click-coupling or by easily removable locking elements. This makes it possible to detach the illumination panel from the vehicle and use it as a separate unit.

The illumination panel comprises at least two hinges, which are arranged such that the illumination panel can be folded at the hinges to form a triangle. The term hinge is herein not only used for a conventional hinge but also includes for example a piece of fabric or a strap joining parts of the illumination panel. The term hinge thus may be defined as a location wherein the illumination panel is prepared to be folded. In order to form a triangle, two or three hinges are appropriate. As an alternative the illumination panel may at least partly be flexible, such that it can be folded at an arbitrary position.

A first end of the illumination panel may be attachable to a second end of the illumination panel in order to form the triangle. The ends may be held together by means of magnets or a click-coupling. The triangle may be used as a warning triangle, for example to inform other road users that an accident has occurred. Due to its location on the boot lid, such a warning triangle may be found quickly and easily when needed. This is an advantage as compared to known technology where the warning triangle is located in the boot or sometimes even below a liftable floor of the boot.

The illumination panel may further comprise an energy source adapted to provide the illumination sources with energy, such as a rechargeable battery. Thereby a warning triangle formed by the illumination panel will also emit light when it is removed from the vehicle and placed externally of the vehicle, for example a warning triangle being placed a hundred meters before a vehicle in order to timely warn other road users. The battery may be charged when the illumination panel is attached to the vehicle.

The illumination panel may further comprise at least one reflective surface. Thereby the warning triangle may be seen in darkness even when the energy source has been depleted.

In an aspect of the present invention there is provided a vehicle comprising an illumination : panel as described above.

The illumination panel may be detachably attached to the vehicle. It may be removed when desirable to be used as a warning triangle.

In an other aspect of the present invention there is provided a use of a detachable illumination panel of a vehicle boot lid for forming a warning triangle. The warning triangle may be partly detachable, such that a part of it, e.g. a tip of the triangle, is still attached to the vehicle whilst the rest of the triangle is detached and hangs down from the boot lid.

### BRIEF DESCRIPTION OF THE DRAWINGS

The present invention will hereinafter be further explained by means of non-limiting examples with reference to the appended drawings wherein:
- Fig. 1: is a schematic drawing of an illumination panel for a boot of a vehicle according to the invention;
- Fig. 2: is a schematic drawing of the rear end of the boot lid seen in Fig. 1 seen from below;
- Fig. 3: illustrates an illumination panel according to the invention when being detached from the vehicle;
- Fig. 4: illustrates the illumination panel of Fig. 3 folded to a warning triangle; and
- Fig. 5: is a cross-sectional drawing of the illumination panel of Fig. 3.

It should be noted that the appended drawings are not necessarily drawn to scale and that the dimensions of some features of the present invention may have been exaggerated for the sake of clarity.

### DETAILED DESCRIPTION

The invention will, in the following, be exemplified by embodiments. It should however be realized that the embodiments are included in order to explain principles of the invention and not to limit the scope of the invention, defined by the appended claims. Details from two or more of the embodiments may be combined with each other.

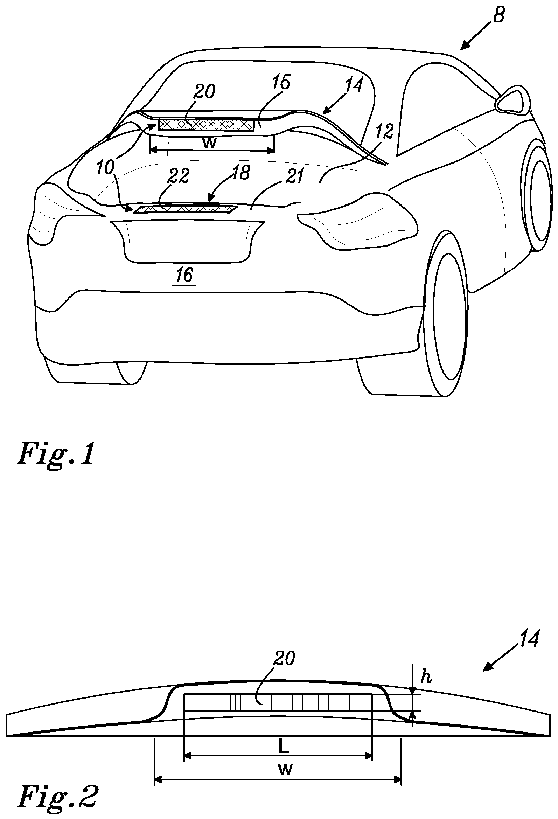

Figure 1 schematically illustrates an illumination system 10 for a boot 12 of a vehicle 8 according to the invention. The boot 12 is delimited by a boot lid 14 and a vehicle body portion 16, forming a part of the body of the vehicle 8. The boot lid 14 has a front end hingedly connected (not illustrated) to the vehicle body portion 16. The boot lid 14 further has an open and a closed position and is movable therebetween. The boot lid 14 has a width w in the transverse direction of the vehicle at a rear end 15 of the boot lid 14. The vehicle body portion 16 comprises a boot lid receiving portion 18 formed to receive the rear end 15 of the boot lid 14 when in the closed position. The illumination system 10 comprises an illumination panel 20 located at the underside of the boot lid 14 at its rear end 15. The boot lid receiving portion 18 has a first surface 21 facing the illumination panel 20, when the boot lid 14 is in its closed position. The illumination system 10 is arranged such that light emitted by the illumination panel 20 illuminates the first surface 21 of the boot lid receiving portion 18 and is at least partly reflected by a reflective region 22, for example a strip of metal, such as aluminum, or chromated metal or chromated plastic.

Figure 2 illustrates the illumination panel 20 in more detail seen from the underside of the boot lid 14. The illumination panel 20 extends in the transverse direction of the vehicle, such that its length L is greater than its height h. Further, the length L of the illumination panel 20 may be less than or equal to the width w of the boot lid at its rear end. The length L of the illumination panel 20 may be for example at least 50%, preferably at least 70% and most preferably at least 90% of the width w of the boot lid 14 at its rear end. Alternatively, not illustrated, the illumination panel may also at least partly cover the sides of the boot lid.

The illumination panel 20 may comprise means for generating a plurality of colours and as well as means for selecting one of the colours. The plurality of colours may be provided by using green, red and blue light emitting diodes and combining the light from these at various selectable intensity levels.

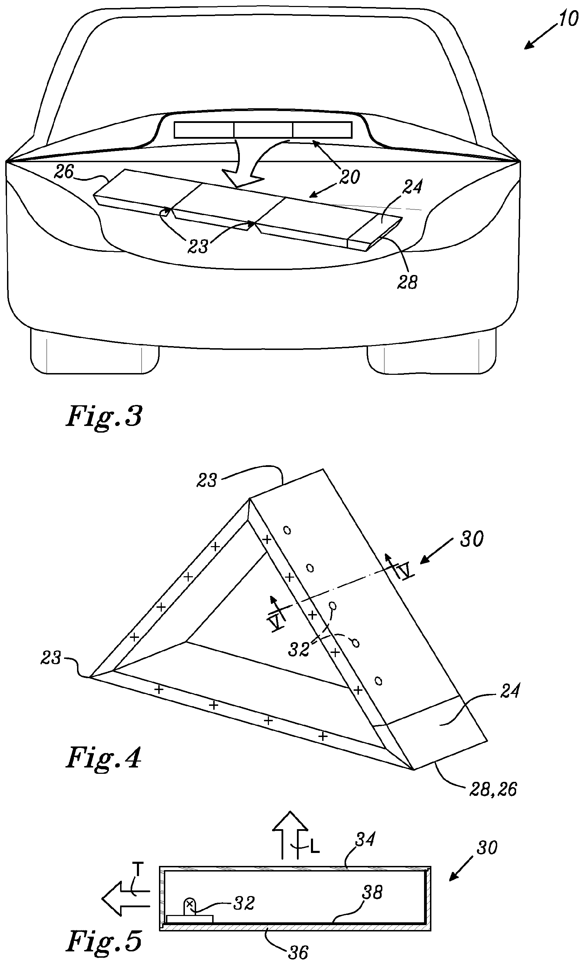

In an embodiment, the illumination panel 20 is detachable from the vehicle to become a separate unit as illustrated in Figure 3. The illumination panel 20 comprises two hinges 23, i.e. a location wherein it is prepared to be folded. It further comprises a rechargeable battery 24, which may provide the light emitting diodes with electrical energy when the illumination panel 20 is detached from the vehicle. When the illumination panel 20 is attached to the vehicle, the electrical system of the vehicle may be used to recharge the battery 24. The illumination panel 20 has a first end 26 and a second end 28.

The illumination panel 20 may comprise one row of light emitting diodes, as shown in Figures 3-5, or a plurality of rows.

By means of the hinges 23 it is possible to fold the illumination panel 20 to form a triangle 30 as illustrated in Figure 4. The first end 26 and the second end 28 of the illumination panel 20 may be attached to each other, for example by magnets at each end. Such magnets may also be used to attach the illumination panel 20 to the boot lid 14. The triangle 30 may be used as a warning triangle. The localization of the illumination panel 20 on the underside of the boot lid 14 makes the warning triangle easy and quick to find. Since the illumination panel 20 emits light, the warning triangle is easy to locate in the boot even in darkness and it is further easy to see for other road users. Prior art warning triangles are made of reflective material, such that they are seen in the reflected light of an approaching road user. However, if the approaching road user has no or only weak light of its own, such as a pedestrian or a bicyclist, the warning triangle is difficult to see. These problems are reduced by the suggested warning triangle, which may actively emit light. In addition, at least a part of the surface of the illumination panel 20 may be made of a reflective material to even further increase visibility of the triangle 30.

Figure 5 is a cross-sectional view of the illumination panel 20 of Figure 3. A light emitting diode 32 emits light. When the illumination panel 20 is attached to the boot lid, the light is mainly emitted in the direction of the arrow L, i.e. downwards towards the reflective region as explained in conjunction with Figure 1. When the illumination panel 20 is detached and used as a warning triangle, light is emitted in the direction of the arrow T. The illumination panel 20 comprises a first part 34, which is transparent for the emitted light and a second part 36, which may be opaque. The first part may for example be made of acrylic glass. The inside 38 of the second part 36 may be reflective to improve the light efficiency.

Further modifications of the invention within the scope of the appended claims are feasible. As such, the present invention should not be considered as limited by the embodiments and figures described herein. Rather, the full scope of the invention should be determined by the appended claims.

It is to be understood that the expression "boot lid" is intended to cover not only conventional boot lids of 3-box design vehicles, but also tailgates of 2-box design vehicles, commonly known as "hatchbacks" and "station wagons".

## Claims

1. An illumination panel (20) detachably attachable to an underside of a boot lid (14) of a vehicle (8), wherein said illumination panel (20) has a first and a second configuration, wherein said illumination panel (20) comprises at least two hinges (23) such that said illumination panel (20), in said first configuration, is configured to be folded at said hinges (23) to form a warning triangle (30), wherein in said second configuration, the illumination panel (20) is configured to be unfolded and to extend such that its length, L, is greater than its height, and can be attached to the underside of the boot lid (14) of the vehicle (8), whereby it extends in the transverse direction of the vehicle and is configured to illuminate the boot (12) of said vehicle (8), and
wherein the length, L, of the illumination panel (20) is at least 50%, preferably at least 70% and most preferably at least 90% of the width, w, of the boot lid (14) at its rear end (15).

2. The illumination panel (20) according to claim 1, wherein said illumination panel (20) comprises means for generating light of a plurality of colours and further comprises means for selecting one of said plurality of colours.

3. The illumination panel (20) according to claim 1 or claim 2, wherein said illumination panel (20) comprises a plurality of illumination sources, which are controllable on an individual level.

4. The illumination panel (20) according to claim 3, wherein said plurality of illumination sources comprise light emitting diodes (32) of at least two different colours, said means for generating light of a plurality of colours being provided by varying the intensity of said light emitting diodes.

5. The illumination panel (20) according to claim 4, wherein said plurality of illumination sources comprises red, green and blue light emitting diodes (32).

6. The illumination panel (20) according to any one of the preceding claims, wherein said illumination panel (20) further comprises an energy source (24) adapted to provide said illumination sources with energy.

7. The illumination panel (20) according to any one of the preceding claims, wherein said illumination panel (20) further comprises at least one reflective surface.

8. A vehicle (8) comprising an illumination panel (20) according to any one of claims 1-7.

9. The vehicle (8) according to claim 8 comprising an illumination system (10) for a boot (12), said boot (12) being delimited by a boot lid (14) and a vehicle body portion (16),
said boot lid (14) having a rear end (15), a front end hingedly connected to said vehicle body portion (16) and a width (w) in the transverse direction of the vehicle (8) at said rear end (15),
said boot lid (14) having at least an open and a closed position and being movable therebetween, said vehicle body portion (16) having a boot lid receiving portion (18) formed to receive said rear end (15) of said boot lid (14) when in said closed position,
said illumination system (10) comprising said illumination panel (20) according to any one of claims 1-7 located at the underside of said boot lid (14) at its rear end (15), and said boot lid receiving portion (18) having a first surface (21) facing said illumination panel (20) when said boot lid (14) is in said closed position,
said illumination system (10) being arranged such that light emitted by said illumination panel (20) is adapted to illuminate said first surface (21) of said boot lid receiving portion (18), and
said illumination panel (20) extending over at least 50%, preferably at least 70% and most preferably at least 90% of the width (w) of the boot lid at said rear end (15).

10. The vehicle (8) according to claim 9, wherein said illumination system (10) further comprises
- a reflective region (22), located on said first surface (21) of said boot lid receiving portion (18), such that said reflective region (22) is adapted to reflect said light emitted by said illumination panel (20).

11. The vehicle (8) according to claim 10, wherein said reflective region (22) is adapted to reflect at least 50%, preferably at least 70% and most preferably at least 90% of said light emitted by said illumination panel (20).

12. Use of an illumination panel (20) according to any one of claims 1-7 for illuminating a boot lid (14) and for forming a warning triangle (30).

## Patentansprüche

1. Beleuchtungspaneel (20), das lösbar an einer Unterseite eines Kofferraumdeckels (14) eines Fahrzeugs (8) anbringbar ist, wobei das Beleuchtungspaneel (20) eine erste und eine zweite Konfiguration aufweist, wobei das Beleuchtungspaneel (20) mindestens zwei Scharniere (23) umfasst, sodass das Beleuchtungspaneel (20) in der ersten Konfiguration so konfiguriert ist, dass es an den Scharnieren (23) zusammenklappbar ist, um ein Warndreieck (30) zu bilden, wobei das Beleuchtungspaneel (20) in der zweiten Konfiguration so konfiguriert ist, dass es auseinanderklappbar ist und sich so erstreckt, dass seine Länge, L, größer als seine Höhe, h, ist, und an der Unterseite des Kofferraumdeckels (14) des Fahrzeugs (8) anbringbar ist, wodurch es sich in der Querrichtung des Fahrzeugs erstreckt und so konfiguriert ist, dass es den Kofferraum (12) des Fahrzeugs (8) beleuchtet, und wobei die Länge, L, des Beleuchtungspaneels (20) mindestens 50 %, bevorzugt mindestens 70 % und am bevorzugtesten mindestens 90 % der Breite, w, des Kofferraumdeckels (14) an seinem hinteren Ende (15) ausmacht.

2. Beleuchtungspaneel (20) nach Anspruch 1, wobei das Beleuchtungspaneel (20) Mittel zum Erzeugen von Licht von einer Vielzahl von Farben umfasst und ferner Mittel zum Auswählen einer der Vielzahl von Farben umfasst.

3. Beleuchtungspaneel (20) nach Anspruch 1 oder Anspruch 2, wobei das Beleuchtungspaneel (20) eine Vielzahl von Beleuchtungsquellen, die individuell regelbar sind, umfasst.

4. Beleuchtungspaneel (20) nach Anspruch 3, wobei die Vielzahl von Beleuchtungsquellen lichtemittierende Dioden (32) von mindestens zwei unterschiedlichen Farben umfasst, wobei die Mittel zum Erzeugen von Licht von einer Vielzahl von Farben durch Variieren der Stärke der lichtemittierenden Dioden bereitgestellt werden.

5. Beleuchtungspaneel (20) nach Anspruch 4, wobei die Vielzahl von Beleuchtungsquellen rotes, grünes und blaues Licht emittierende Dioden (32) umfasst.

6. Beleuchtungspaneel (20) nach einem der vorhergehenden Ansprüche, wobei das Beleuchtungspaneel (20) ferner eine Energiequelle (24), die angepasst ist, um die Beleuchtungsquellen mit Energie zu versorgen, umfasst.

7. Beleuchtungspaneel (20) nach einem der vorhergehenden Ansprüche, wobei das Beleuchtungspaneel (20) ferner mindestens eine Reflexionsfläche umfasst.

8. Fahrzeug (8), das ein Beleuchtungspaneel (20) nach einem der Ansprüche 1-7 umfasst.

9. Fahrzeug (8) nach Anspruch 8, das ein Beleuchtungssystem (10) für einen Kofferraum (12) umfasst, wobei der Kofferraum (12) von einem Kofferraumdeckel (14) und einem Fahrzeugkarosserieabschnitt (16) begrenzt wird,
wobei der Kofferraumdeckel (14) ein hinteres Ende (15), ein vorderes Ende, das mit dem Fahrzeugkarosserieabschnitt (16) klappbar verbunden ist, und eine Breite (w) in der Querrichtung des Fahrzeugs (8) am hinteren Ende (15) aufweist,
wobei der Kofferraumdeckel (14) mindestens eine offene und eine geschlossene Stellung aufweist und dazwischen bewegbar ist, wobei der Fahrzeugkarosserieabschnitt (16) einen Kofferraumdeckelaufnahmeabschnitt (18), der so ausgebildet ist, dass er das hintere Ende (15) des Kofferraumdeckels (14) aufnimmt, wenn er in der geschlossenen Stellung ist, aufweist,
wobei das Beleuchtungssystem (10) das Beleuchtungspaneel (20) nach einem der Ansprüche 1-7, das sich an der Unterseite des Kofferraumdeckels (14) an dessen hinterem Ende (15) befindet, umfasst und der Kofferraumdeckelaufnahmeabschnitt (18) eine erste Fläche (21), die dem Beleuchtungspaneel (20) zugewandt ist, wenn der Kofferraumdeckel (14) in der geschlossenen Stellung ist, aufweist,
wobei das Beleuchtungssystem (10) so angeordnet ist, dass durch das Beleuchtungspaneel (20) emittiertes Licht so angepasst wird, dass es die erste Fläche (21) des Kofferraumdeckelaufnahmeabschnitts (18) beleuchtet, und wobei sich das Beleuchtungspaneel (20) über mindestens 50 %, bevorzugt mindestens 70 % und am bevorzugtesten mindestens 90 % der Breite, w, des Kofferraumdeckels am hinteren Ende (15) erstreckt.

10. Fahrzeug (8) nach Anspruch 9, wobei das Beleuchtungssystem (10) ferner Folgendes umfasst:
- einen Reflexionsbereich (22), der sich auf der ersten Fläche (21) des Kofferraumdeckelaufnahmeabschnitts (18) befindet, damit der Reflexionsbereich (22) so angepasst wird, dass er das durch das Beleuchtungspaneel (20) emittierte Licht reflektiert.

11. Fahrzeug (8) nach Anspruch 10, wobei der Reflexionsbereich (22) so angepasst ist, dass er mindestens 50 %, bevorzugt mindestens 70 % und am bevorzugtesten mindestens 90 % des durch das Beleuchtungspaneel (20) emittierten Lichts reflektiert.

12. Nutzung eines Beleuchtungspaneels (20) nach einem der Ansprüche 1-7 zum Beleuchten eines Kofferraumdeckels (14) und zum Bilden eines Warndreiecks (30).

## Revendications

1. Panneau d'éclairage (20) susceptible d'être attaché de manière détachable sur un dessous d'un capot (14) de coffre d'un véhicule (8), ledit panneau d'éclairage (20) ayant une première et une deuxième configuration, ledit panneau d'éclairage (20) comprenant au moins deux charnières (23) de façon à ce que ledit panneau d'éclairage (20), dans ladite première configuration, soit configuré pour être plié au niveau desdites charnières (23) pour former un triangle de présignalisation (30), le panneau d'éclairage (20), dans ladite deuxième configuration, étant configuré pour être déplié et pour s'étendre de façon à ce que sa longueur, L, soit supérieure à sa hauteur, h, et pouvant être attaché sur le dessous du capot (14) de coffre du véhicule (8), moyennant quoi il s'étend dans la direction transversale du véhicule et est configuré pour éclairer le coffre (12) dudit véhicule (8), et
la longueur, L, du panneau d'éclairage (20) représentant au moins 50 %, de préférence au moins 70 % et idéalement au moins 90 % de la largeur, w, du capot (14) de coffre au niveau de son extrémité arrière (15).

2. Panneau d'éclairage (20) selon la revendication 1, lequel panneau d'éclairage (20) comprend des moyens de génération de lumière d'une pluralité de couleurs et comprend en outre des moyens de sélection d'une de ladite pluralité de couleurs.

3. Panneau d'éclairage (20) selon la revendication 1 ou la revendication 2, lequel panneau d'éclairage (20) comprend une pluralité de sources d'éclairage, lesquelles sont susceptibles d'être commandées individuellement.

4. Panneau d'éclairage (20) selon la revendication 3, dans lequel ladite pluralité de sources d'éclairage comprennent des diodes électroluminescentes (32) d'au moins deux couleurs différentes, lesdits moyens de génération de lumière d'une pluralité de couleurs étant fournis par variation de l'intensité desdites diodes électroluminescentes.

5. Panneau d'éclairage (20) selon la revendication 4, dans lequel ladite pluralité de sources d'éclairage comprend des diodes électroluminescentes rouges, vertes et bleues (32).

6. Panneau d'éclairage (20) selon l'une quelconque des revendications précédentes, lequel panneau d'éclairage (20) comprend en outre une source d'énergie (24) adaptée à fournir de l'énergie auxdites sources d'éclairage.

7. Panneau d'éclairage (20) selon l'une quelconque des revendications précédentes, lequel panneau d'éclairage (20) comprend en outre au moins une surface réfléchissante.

8. Véhicule (8) comprenant un panneau d'éclairage (20) selon l'une quelconque des revendications 1 à 7.

9. Véhicule (8) selon la revendication 8 comprenant un système d'éclairage (10) pour un coffre (12), ledit coffre (12) étant délimité par un capot (14) de coffre et un partie (16) de carrosserie de véhicule,
ledit capot (14) de coffre ayant une extrémité arrière (15), une extrémité avant reliée par charnières à ladite partie (16) de carrosserie de véhicule et une largeur (w) dans la direction transversale du véhicule (8) au niveau de ladite extrémité arrière (15),
ledit capot (14) de véhicule ayant au moins une position ouverte et une position fermée et étant mobile entre elles, ladite partie (16) de carrosserie de véhicule ayant une partie réceptrice (18) de capot de coffre ménagée pour recevoir ladite extrémité arrière (15) dudit capot (14) de coffre lorsque celle-ci occupe ladite position fermée,
ledit système d'éclairage (10) comprenant ledit panneau d'éclairage (20) selon l'une quelconque des revendications 1 à 7 situé au niveau du dessous dudit capot (14) de coffre au niveau de son extrémité arrière (15), et ladite partie réceptrice (18) de capot de coffre ayant une première surface (21) faisant face audit panneau d'éclairage (20) lorsque ledit capot (14) de coffre occupe ladite position fermée,
ledit système d'éclairage (10) étant agencé de façon à ce que la lumière émise par ledit panneau d'éclairage (20) soit adaptée à éclairer ladite première surface (21) de ladite partie réceptrice (18) de capot de coffre, et
ledit panneau d'éclairage (20) s'étendant sur au moins 50 %, de préférence au moins 70 % et idéalement au moins 90 % de la largeur (w) du capot de coffre au niveau de ladite extrémité arrière (15).

10. Véhicule (8) selon la revendication 9, dans lequel ledit système d'éclairage (10) comprend en outre
- une région réfléchissante (22), située sur ladite première surface (21) de ladite partie réceptrice (18) de capot de coffre, de façon à ce que ladite région réfléchissante (22) soit adaptée à réfléchir ladite lumière émise par ledit panneau d'éclairage (20).

11. Véhicule (8) selon la revendication 10, dans lequel ladite région réfléchissante (22) est adaptée à réfléchir au moins 50 %, de préférence au moins 70 % et idéalement au moins 90 % de ladite lumière émise par ledit panneau d'éclairage (20).

12. Utilisation d'un panneau d'éclairage (20) selon l'une quelconque des revendications 1 à 7 pour l'éclairage d'un capot (14) de coffre et pour la formation d'un triangle de présignalisation (30).
